# FASCICULE DE BREVET EUROPEEN

(11) **EP 0 891 946 B1**
(45) Date de publication et mention de la délivrance du brevet: **24.01.2001**
(21) Numéro de dépôt: 98401744.2
(22) Date de dépôt: 09.07.1998
(51) Int. Cl.: C01B 33/18, C03B 19/10, C03C 1/00

(54) **Procédé de fabrication d'une poudre de silice**
Verfahren zum Herstellen eines Siliciumdioxydpulvers
Process of manufacturing a silica powder

(30) Priorité: 17.07.1997 FR 9709071
(43) Date de publication de la demande: 20.01.1999
(73) Titulaire: ALCATEL, 75008 Paris (FR)
(72) Inventeur: Campion, Jean-Florent, 92270 Bois Colombes (FR); Goudeau, Jacques, NE, Hickory 28601 (US); Chariot, Jean-François, 78160 Marly-le-Roi (FR); Lavallade, Christelle, 95800 Courdimanche (FR)
(74) Mandataire: Feray, Valérie

(56) Documents cités:
- EP-A- 0 271 281
- EP-A- 0 360 479
- EP-A- 0 578 553
- US-A- 4 042 361

## Description

L'invention concerne un procédé de fabrication de poudre de silice par une méthode sol-gel, dans lequel on réalise une suspension dans l'eau de particules de silice, on gélifie la suspension, on sèche sous micro-onde le gel obtenu, on fractionne le gel-sec en granulés de silice de diamètre compris entre 10 µm et 1000 µm qui présentent une densité apparente de l'ordre de 0,5 g/cm³ à 0,6 g/cm³ et une porosité inférieure à 20%, et on effectue un tamisage des granulés entre 100 µm et 500 µm.

Un tel procédé est notamment connu de la demande de brevet européen EP-0 578 553. Le but de l'invention est d'améliorer la capacité de production du procédé décrit dans cette demande, qui est considérée comme faisant partie intégrante de la présente description.

A cet effet, l'invention a pour objet un procédé de fabrication de poudre de silice par une méthode sol-gel, dans lequel on réalise une suspension dans l'eau de particules de silice, on gélifie la suspension, on sèche sous micro-ondes le gel obtenu, on fractionne le gel-sec en granulés de silice de diamètre compris entre 10 µm et 1000 µm qui présentent une densité apparente de l'ordre de 0,5 g/cm³ à 0,6 g/cm³ et une porosité inférieure à 20%, et on effectue un tamisage des granulés entre 100 µm et 500 µm, caractérisé en ce qu'on utilise comme particules de silice un mélange de suies dont la taille est inférieure à 0,1 µm et de grains de silice dont la taille est supérieure à 1 µm.

La suspension aqueuse ainsi réalisée atteint une concentration maximale en poids total de silice supérieure à la concentration maximale en poids d'une suspension constituée uniquement des suies, respectivement égales par exemple à 90% et 70%. Il en résulte que la capacité de production du procédé selon l'invention augmente sous l'effet de l'augmentation de la concentration de la suspension aqueuse, le rendement du tamisage étant pris constant et égal à celui décrit dans la demande citée précédemment.

Les suies peuvent être des suies synthétiques.

D'une façon avantageuse, le procédé selon l'invention est mis en oeuvre par des cycles successifs tels qu'on utilise comme grains de silice pour n'importe lequel de ces cycles des granulés hors normes rejetés par le tamisage entre 100 µm et 500 µm des granulés fabriqués lors d'un cycle immédiatement précédent.

Il en résulte une augmentation progressive de la capacité de production de chaque cycle due à l'augmentation de la concentration totale en poids de silice à l'issue de chaque cycle, limitée cependant par une valeur asymptotique. D'autre part, le rendement cumulatif de production compté en poids cumulé de granulés fabriqués rapporté au poids cumulé de suies synthétiques introduites dans chaque cycle augmente avec le nombre de cycles en se rapprochant de la valeur théorique de l'unité.

L'exemple unique ci-dessous donne des valeurs des augmentations de capacité et de rendement cumulatif du procédé selon l'invention pour une série de 10 cycles.

### Exemple unique

On réalise la même suspension aqueuse que celle de l'exemple 1 de la demande citée précédemment, à laquelle on fait subir les mêmes étapes jusqu'au tamisage des granulés entre 100 µm et 500 µm, le rendement du tamisage étant égal à 70%. Ce cycle 1 est dit d'amorçage. Les granulés hors normes sont ensuite récupérés pour être recyclés dans le cycle 2 et ainsi de suite.

Au début de chaque nouveau cycle, on mélange une quantité constante et égale à 70 kg de suies par exemple synthétiques dans une quantité constante et égale à 30 kg d'eau avec les granulés hors nomes rejetés par le tamisage du cycle immédiatement précédent.

Dans le tableau ci-après,
• la colonne 1 indique le numéro du cycle,
• la colonne 2 indique la concentration en poids et en pour-cent des particules de silice dans le mélange au début de chaque cycle,
• la colonne 3 indique la quantité en kg de granulés produits dont la taille est comprise 100 µm et 500 µm,
• la colonne 4 indique la quantité en kg de granulés hors normes rejetés par le tamisage entre 100 µm et 500 µm,
• la colonne 5 indique le rendement cumulatif du procédé selon l'invention.

| | | | | |
|---|---|---|---|---|
| 1 | 2 | 3 | 4 | 5 |
| 1 | 70 | 49 | 21 | 70 |
| 2 | 75 | 64 | 27 | 80 |
| 3 | 76 | 69 | 29 | 86 |
| 4 | 77 | 69 | 30 | 89 |
| 5 | 77 | 70 | 30 | 91 |
| 6 | 77 | 70 | 30 | 93 |
| 7 | 77 | 70 | 30 | 94 |
| 8 | 77 | 70 | 30 | 95 |
| 9 | 77 | 70 | 30 | 95 |
| 10 | 77 | 70 | 30 | 96 |

Les cycles 2 et 3 au cours desquels la concentration en poids des particules de silice dans la suspension aqueuse augmente rapidement sont dits de démarrage. Cette concentration devient constante au cours du cycle 4 et suivants qui sont dits stabilisés.

Il faut noter que la suspension aqueuse des cycles stabilisés possède une viscosité environ trois fois inférieure à celle du cycle de d'amorçage, ce qui engendre une économie de la puissance consommée par l'outil de dispersion des particules de silice dans l'eau.

Entre le cycle 1 et le cycle stabilisé 10, la concentration en poids de la suspension aqueuse passe de 70% à 77%, et le rendement de production cumulatif, de 70% à 96%.

Ces résultats illustrent l'augmentation de capacité et de rendement global de production du procédé selon l'invention.

## Revendications

1. Procédé de fabrication de poudre de silice par une méthode sol-gel, dans lequel on réalise une suspension dans l'eau de particules de silice, on gélifie la suspension, on sèche sous micro-ondes le gel obtenu, on fractionne le gel-sec en granulés de silice de diamètre compris entre 10 µm et 1000 µm qui présentent une densité apparente de l'ordre de 0,5 g/cm³ à 0,6 g/cm³ et une porosité inférieure à 20%, et on effectue un tamisage des granulés entre 100 µm et 500 µm,
**caractérisé en ce qu'**on utilise comme particules de silice un mélange de suies dont la taille est inférieure à 0,1 µm et de grains de silice dont la taille est supérieure à 1 µm.

2. Procédé selon la revendication 1, dans lequel on recycle les granulés hors normes rejetés par le tamisage entre 100 µm et 500 µm en tant que grains de silice de la suspension aqueuse.

3. Procédé selon l'une des revendications 1 ou 2 caractérisé en ce que lesdites suies sont des suies synthétiques.

## Claims

1. A method of manufacturing silica powder by a sol-gel technique, in which a suspension of silica particles is made in water, the suspension is gelled, the resulting gel is dried under microwaves, the dried gel is fractioned into silica granules having a diameter lying in the range 10 µm to 1000 µm presenting an apparent density of about 0.5 g/cm³ to 0.6 g/cm³ and porosity of less than 20%, and the granules are screened to lie in the range 100 µm to 500 µm,
the method being characterized in that the silica particles used comprise a mixture of soots having a size of less than 0.1 µm and of silica grains of size greater than 1 µm.

2. A method according to claim 1, in which the out-of-range granules rejected by the screening for the range 100 µm to 500 µm are recycled as silica grains for the aqueous suspension.

3. A method according to claim 1 or 2, characterized in that said soots are synthetic soots.

## Patentansprüche

1. Verfahren zur Herstellung von Kieselerdepulver durch eine Sol-Gel-Methode, bei der eine wässerige Suspension von Kieselerdepartikeln realisiert wird, die Suspension geliert wird, das erzielte Gel in einem Mikrowellenofen getrocknet wird, das getrocknete Gel in Kieselerdekörner fraktioniert wird, mit einem Durchmesser zwischen 10 µm und 1000 µm, die eine scheinbare Dichte zwischen 0,5 g/cm³ und 0,6 g/cm³ aufweisen und eine Porosität kleiner als 20%, und die Körner zwischen 100 µm und 500 µm ausgesiebt werden, dadurch gekennzeichnet, daß als Kieselerdepartikel eine Mischung aus Aschen verwendet wird, deren Größe kleiner als 0,1 µm ist, und Kieselerdekörnern, deren Größe größer als 1 µm ist.

2. Verfahren nach Anspruch 1, bei dem die Körner außerhalb der Norm zwischen 100 µm und 500 µm, aussortiert durch Sieben, als Kieselerdekörner der wässerigen Suspension wiederverwendet werden.

3. Verfahren nach einem der Ansprüche 1 oder 2, dadurch gekennzeichnet, daß es sich bei der Asche um synthetischer Asche handelt.
